# EUROPÄISCHE PATENTSCHRIFT

(11) **EP 1 740 338 B1**
(45) Veröffentlichungstag und Bekanntmachung des Hinweises auf die Patenterteilung: **05.12.2007**
(21) Anmeldenummer: 05707584.8
(22) Anmeldetag: 23.02.2005
(51) Int. Cl.: B23D 37/16

(54) **RÄUMWERKZEUG UND VERFAHREN ZUR SPANENDEN BEARBEITUNG VON BOHRUNGSOBERFLÄCHEN**
BROACHING TOOL AND METHOD FOR MACHINING THE SURFACES OF BORES
OUTIL A BROCHER ET PROCEDE POUR USINER DES SURFACES DE TROUS, PAR ENLEVEMENT DE MATIERE

(30) Priorität: 15.04.2004 DE 102004019302
(43) Veröffentlichungstag der Anmeldung: 10.01.2007
(73) Patentinhaber: MAPAL Fabrik für Präzisionswerkzeuge Dr. Kress KG, D-73431 Aalen (DE)
(72) Erfinder: KRESS, Dieter, 73431 Aalen (DE); HÄBERLE, Friedrich, 73466 Lauchheim (DE)
(74) Vertreter: Gleiss, Alf-Olav
(86) Internationale Anmeldenummer: PCT/EP2005/001860
(87) Internationale Veröffentlichungsnummer: WO 2005/107986

(56) Entgegenhaltungen:
- EP-A- 0 104 694
- US-A1- 2003 118 418

## Beschreibung

Die Erfindung betrifft ein Räumwerkzeug zur spanenden Bearbeitung von Bohrungsoberflächen, nämlich zur Einbringung von mindestens einer Nut, mit einem mindestens eine Schneide aufweisenden Schneidenkopf und mit einem den.Schneidenkopf tragenden Grundkörper sowie ein Verfahren zur spanenden Bearbeitung von Bohrungsoberflächen gemäß Oberbegriff des Anspruchs 12. Ein Werkzeug bzw. ein Verfahren gemäß den Oberbegriffen der Ansprüche 1 bzw. 12 ist aus der EP 0 104 694 bekannt.

Räumwerkzeuge und Verfahren zur spanenden Bearbeitung von Bohrungsoberflächen sind bekannt. Sie dienen dazu, eine Bohrungsoberfläche mit mindestens einer Nut zu versehen, die vorzugsweise einen Drall aufweist, beispielsweise von 20°. Die Nut verläuft also auf einer gedachten Schraubenlinie über einen Drehwinkel von beispielsweise 20°, der über die Länge der zu bearbeitenden Bohrung gemessen wird. Bekannte Räumwerkzeuge führen bei dieser Bearbeitung eine auch als, Kippbewegung bezeichnete Taumelbewegung durch, die von einer das Räumwerkzeug aufnehmenden Werkzeugspindel ausgeführt wird. Das Räumwerkzeug wird bei der Durchführung des Verfahrens zur Bearbeitung einer Bohrungsoberfläche, während der Taumelbewegung in axialer Richtung in die zu bearbeitende Bohrung eingeführt Wenn eine Nut mit einem- Drall realisiert werden soll, muss das Werkzeug verdreht werden. Eine Rotationsbewegung des Werkstücks ist in vielen Fällen nicht oder nur unter großem konstruktiven und finanziellen Aufwand durchführbar, Außerdem bedarf es eines Spezialwerkzeugs zur Durchführung der Taumelbewegung des Räumwerkzeugs. Auch dies macht die hier vorgesehen Bearbeitung einer Bohrungsoberfläche aufwendig und teuer.

Es wurde vorgeschlagen, ein Räumwerkzeug mit einem Grundkörper und einem mit diesem elastisch verbundenen Schneidenkopf auszubilden. Der Schneidenkopf wird in eine zu bearbeitende Bohrung eingeführt, während der Grundkörper von einer, geeigneten Werkzeugmaschine auf einer Kreisbahn bewegt wird, die konzentrisch zur Mittelachse der zu bearbeitenden Bohrungsoberfläche verläuft. Es ist also erforderlich, große Massen zu bewegen, was speziell im höheren Drehzahlbereich zu Vibrationen führt. Außerdem ist für manche Einsatzzwecke die Bearbeitungszeit der Bohrungsoberfläche zur Einbringung einer definierten Nut zu lang.

Aufgabe der Erfindung ist es daher, ein Räumwerkzeug zu schaffen, das einfach und damit kostengünstig realisierbar ist und bei dem im Betrieb keine großen Vibrationen auftreten. Schließlich soll die Bearbeitung einer Bohrungsoberfläche wenig Zeit in Anspruch nehmen.

Zur Lösung dieser Aufgabe wird ein Räumwerkzeug vorgeschlagen, das die in Anspruch 1 genannten Merkmale aufweist. Es umfasst einen Schneidenkopf und einen Grundkörper. Es zeichnet sich dadurch aus, dass der Schneidenkopf drehbeweglich und exzentrisch im Grundkörper gelagert ist; und dass die Mittelachse des Schneidenkopfs gegenüber der Mittelachse des Grundkörpers unter einem spitzen Winkel verläuft.

Weitere Ausgestaltungen des Räumwerkzeugs ergeben sich aus den Unteransprüchen.

Aufgabe der Erfindung ist es außerdem, ein Verfahren zur Verfügung zu stellen, das der spanenden Bearbeitung von Bohrungsoberflächen dient, nämlich der Einbringung mindestens einer Nut, mit dem die Bearbeitung eines. Werkstücks rascher als mit herkömmlichen Verfahren durchführbar ist.

Zur Lösung dieser Aufgabe wird ein Verfahren vorgeschlagen, das sich dadurch auszeichnet, dass der Grundkörper des Räumwerkzeugs in Rotation versetzt wird und koaxial zur Mittelachse der zu bearbeitenden Bohrungsoberfläche eine Relativbewegung gegenüber dem Werkstück ausführt. Dabei wird in der Regel der Grundkörper einer Vorschubbewegung gegenüber dem Werkstück unter - worfen. Denkbar ist es aber auch, das Werkstück gegenüber dem in axiale Richtung feststehenden. Grundkörper zu verlagern oder beide Elemente aufeinander zu zu bewegen. Dabei führt auch der Schneidenkopf eine axiale Bewegung gegenüber der zu bearbeitenden Bohrungsoberfläche aus.

Die Erfindung wird im Folgenden anhand der Zeichnungen näher erläutert. Die einzige Figur zeigt einen Teillängsschnitt durch ein Räumwerkzeug.

Das Räumwerkzeug 1 weist einen Grundkörper 3 und einen Schneidenkopf 5 auf, der exzentrisch und drehbar im Grundkörper 3 getagert ist.

Von dem Grundkörper 3 ist hier nur der den Schneidenkopf 5 auf nehmende Teil dargestellt. An dem dem Schneidenkopf 5 gegenüberliegenden, hier abgebrochenen Ende des Grundkörpers kann beispielsweise ein Werkzeugschaft vorgesehen werden, der der Verbindung des Grundkörpers 3 mit einer Werkzeugmaschine dient.

Es ist aber auch möglich, den Grundkörper 3 über Adapter, Zwischenstücke oder dergleichen mit einer Werkzeugmaschine zu verbinden. Diese dient dazu, den Grundkörper 3 bei der Bearbeitung einer Bohrungsoberfläche und bei der Herstellung mindestens einer Nut in dieser Bohrungsoberfläche in Rotation zu versetzen.

Bei der Bearbeitung eines Werkstücks dreht sich also der Grundkörper 3 um seine Mittelachse 7, die mit der Mittelachse der zu bearbeitenden Bohrungsoberfläche zusammenfällt.

Der Grundkörper weist ein Basiselement 9 auf, das mit einer Ausnehmung 11 versehen ist, in die eine Lagereinrichtung 13 einsetzbar ist. Diese dient dazu, den Schneidenkopf 5 drehbar aufzunehmen. Das heißt also, dass der Schneidenkopf gegenüber dem Grundkörper 3 und dessen Basiselement 9 drehbar gelagert ist.

Die Lagereinrichtung 13 nimmt-sowohl radiale als auch axiale Kräfte auf. Das heißt, dass bei der Bearbeitung einer Bohrungsoberfläche mittels des Schneidenkopfs 5 auf diesen über den Grundkörper 3

Druckkräfte ausgeübt werden können. Umgekehrt werden von dem Schneidenkopf 5 in den Grundkörper 3 eingeleitete axiale Druckkräfte mittels der Lagereinrichtung 13 abgefangen.

Die Lagereinrichtung 13 ist so ausgebildet, dass bei einer Rotation des Grundkörpers 3 kein Drehmoment auf den Schneidenkopf 5 übertragen wird.

Die Lagereinrichtung. 13 wird mittels einer Befestigungsplatte 15 in der Ausnehmung 11 verankert. Dabei ist vorgesehen, dass eine vorspringende Anlageschulter 17 etwas in die Ausnehmung 11 eingreift, um die Lagereinrichtung 13 zu halten. Die Befestigungsplatte 15 wird mittels geeigneter Befestigungsmittel, beispielsweise Schrauben 19, am Basiselement 9 verankert.

Bei dem hier dargestellten Ausführungsbeispiel weist die Lagereinrichtung 13 vorzugsweise zwei koaxial zueinander angeordnete Schrägkugellager 21 und 23 auf. Die Anlageschulter 17 liegt auf einem Außenring 25 des, ersten Schrägkugellagers 21 auf. Dieser leitet die von der Anlageschulter 17 ausgeübten Druckkräfte über ein vorzugsweise ringförmiges Abstandselement 27 auf den Außenring 29 des zweiten Schrägkugellagers 23 weiter, der an einer in den Innenraum der Ausnehmung 11 vorspringenden Anlagestufe 31 anliegt. Die Schrägkugellager 21 und 23 werden also, von der Befestigungsplatte 15 zwischen deren Anlageschulter 17 und der Anlagestufe 31 eingespannt.

Die Schrägkugellager 21 und 23 weisen jeweils einen Innenring 33, 35 auf, die an einem in der Ausnehmung 11 angeordneten Lagerzapfen 37 des Schneidenkopfs 5 anliegen.

Die Innenringe 33 und 35 sind zwischen einer über die Umfangsfläche des Lagerzapfens vorspringende Lagerschulter 39 des Schneidenkopfs 5 und einem an der Umfangsfläche des Lagerzapfens 37 verankerten Widerlager 41 eingespannt, das in einem Abstand zur Lagerschulter 39 angeordnet ist und das beispielsweise als Feder- oder Gewindering ausgebildet sein kann. Zwischen den Innenringen 33 und 35 befindet sich ein vorzugsweise ringförmiges Abstandselement 43.

Zwischen den Innen- und Außenringen der Schrägkugellager 21 und 23 sind jeweils eine Anzahl von Kugeln 45 und 47 vorgesehen. Dabei sind die Innen- und Außenringe so ausgebildet, dass von dem Schneidenkopf 5 in Richtung auf den Grundkörper 3 wirkende Axialkräfte über die Lagerschulter 39, den Innenring 33 des ersten Schrägkugellagers 21, das Abstandselement 43, den Innenring 35 des zweiten Schrägkugellagers 23 über die Kugel 47 des zweiten Schrägkugellagers 23 auf dessen Außenring 29 und damit auf die Anlagestufe 31 abgeleitet werden. Letztlich stützt sich also - in axialer Richtung gesehen - der Schneidenkopf 5 an der Anlagestufe 31 des Grundkörpers 3 ab.

Werden auf den Schneidenkopf 5 Zugkräfte ausgeübt, so wirken diese auf das Widerlager 41, das sich über den Innenring 35 des zweiten Schrägkugellagers, das Abstandselement 43, den Innenring 33 des ersten Schrägkugellagers 21 über die Kugel 45 und den Au-ßenring 25 des ersten Schrägkugellagers an der Anlageschulter 17 der Befestigungsplatte 15 abstützt. Da die Befestigungsplatte 15 über Schrauben 19 mit dem Basiselement 9 des Grundkörpers 3 fest verbunden ist, werden also axiale Kräfte in beiden Richtungen vom Grundkörper 3 über die Lagereinrichtung 13 abgefangen.

Zusätzlich ist- hier vorzugsweise noch vorgesehen, dass der Lagerzapfen 37 einen Fortsatz 49 aufweist, der konzentrisch zum Lagerzapfen 37 angeordnet und gegebenenfalls mit einem kleineren Durchmesser als dieser versehen ist. Der Fortsatz 29 stützt sich über ein geeignetes Lager der Lagereinrichtung 13 in radialer Richtung gesehen am Basiselement 9, das heißt an der Innenfläche der Ausnehmung 11, ab und vermeidet beziehungsweise reduziert Kippbewegungen des Schneidenkopfs 5 beziehungsweise des Lagerzapfens 37 in der Ausnehmung 11 des Grundkörpers 3. Vorzugsweise ist hier ein Rillenkugellager 51 vorgesehen, das mit seinem Außenring 53 an der Innenfläche der Ausnehmung 11 und mit seinem Innenring 55 an der Umfangsfläche des Fortsatzes 49 anliegt. Zwischen Außen- und Innenring 33; 35 befindet sich eine Anzahl von Kugeln 57.

Die Befestigungsplatte 15 weist in Durchgangsbereich des Schneidenkopfes 5 eine geeignete Dichtungseinrichtung 59 auf. Schließlich ist noch eine auf der Befestigungsplatte 15 aufliegende Abschlussplatte 61 vorgesehen, die auf geeignete Weise, beispielsweise über Schrauben 63 am Grundkörper 3, hier an der Befestigungsplatte 15 angebracht ist.

Wesentlich ist, dass der Schneidenkopf 5 exzentrisch zu der Mittelachse 7 im Grundkörper 3 gelagert ist. Entsprechend ist die Ausnehmung 11 exzentrisch im Basiselement 9 des Grundkörpers 3 vorgesehen. Auch die Durchbrechungen in der Befestigungsplatte 15 und der Abschlussplatte 61 für den Schneidenkopf 5 sind exzentrisch angeordnet.

Der Schneidenkopf 5 ist im übrigen gegenüber der Mittelachse 7 des Grundkörpers 3 geneigt. Das heißt, die Mittelachse 65 des Schneidenkopfs 5 schließt mit der Mittelachse 7 des Grundkörpers 3 einen spitzen Winkel α ein, der beispielsweise 1°15° beträgt: Dieser spitze Winkel öffnet sich vom Schneidenkopf 5 gesehen in Richtung zum Grundkörper 3. Entsprechend ist auch die Ausnehmung 11 im Basiselement 9,des Grundkörpers 3 geneigt.

Der Schneidenkopf 5 weist einen Schneidenkranz 67 auf, der mindestens eine Schneide 69 umfasst. Falls in eine Bohrungsoberfläche nur eine Nut eingebracht werden: soll, reicht eine einzige Schneide 69 aus. Vorzugsweise werden jedoch mehrere in gleichem Abstand zueinander angeordnete Nuten in einer Bohrungsoberfläche vorgesehen. Entsprechend viele Schneiden 69 müssen dann am Schneidenkranz 67 vorgesehen werden. Sie sind in der Regel in gleichem Abstand zueinander angeordnet und ragen über die Umfangsfläche 71 des Schneidenkranzes hinaus.

Vorzugsweise ist der Schneidenkopf 1 nicht einstückig ausgebildet. Er weist vielmehr einen Werkzeugschaft 73 auf, der an seinem einen innerhalb des Grundkörpers 3 liegenden Ende den Lagerzapfen 37 umfasst und an seinem gegenüberliegenden Ende einen Befestigungsbereich 75 für einen getrennt ausgebildeten Schneidenkranz 67. Der Befestigungsbereich 75 kann beispielsweise einen Befestigungszapfen aufweisen, auf den der Schneidenkranz 67 aufgeschraubt oder aufgesteckt und mittels einer Befestigungsschraube 77 fixiert wird. Denkbar ist es aber auch, am Schneidenkranz 67 einen üblichen Spannzapfen oder -kegel vorzusehen, der in eine geeignete Ausnehmung im Werkzeugschaft 73 eingreift.

Die zweiteilige Ausführungsform des. Schneidenkopfs 5 hat den Vorteil, dass das Räumwerkzeug 1 mit unterschiedlichen Schneidenkränzen 67 ausgerüstet werden kann. Außerdem ist bei Verschleiß ein Schneidenkranz 67 leicht austauschbar.

Der Schneidenkopf 5 weist hier eine Führungseinrichtung 79 auf, die einen geschlossenen oder einzelne Führungsbereiche aufweisenden Führungsring 81 umfassen kann.

Wenn, wie bei dem in der Figur dargestellten Räumwerkzeug 1 der Schneidenkopf 5 einen Führungsring 81 mit balliger Außenfläche aufweist, liegt dessen Mittelpunkt 83 auf dem Schnittpunkt der Mittelachse 65 des Schneidenkopfs 5, die mit der Mittelachse des Schneidenkranzes 87 und der Mittelachse des Führungsrings 81 zusammenfällt, mit der Mittelachse 7 des Grundkörpers 3. Der Mittelpunkt 83 bildet damit den Taumelpunkt des Räumwerkzeugs 1, worauf unten noch näher eingegangen wird.

Wird bei einem Räumwerkzeug 1 mit einem Schneidenkopf 5 die Führungseinrichtung 79. weggelassen, so sind der Abstand des Schneidenkranzes- 67 zum Grundkörper 3 und der Winkel α zwischen der Mittelachse 65. des Schneidenkopfs 5 und der Mittelachse 7 des Grundkörpers 3, so zu wählen, dass der Mittelpunkt 84 des Schneidenkranzes 67 mit dem Schnittpunkt der Mittelachse 65 mit der Mittelachse 7 zusammenfällt. Der Taumelpunkt liegt dann links von dem hier eingezeichneten Mittelpunkt 83. Damit bildet der Taumelpunkt im Bereich des Schneidenkranzes 67 den Mittelpunkt der auf der Umfangsfläche 71 liegenden Schneiden 69 und damit auch des Flugkreises, auf dem die Schneiden 69 bei einer Rotation des Schneidenkopfs 5 liegen.

Aus der Figur ist ersichtlich, dass das Räumwerkzeug mit einer Kühl/Schmiermittetzufuhr versehen sein kann. Dazu ist hier im Griandkörper 3 ein zentraler Kühl-/Schmiermittelkanal 85 vorgesehen, der konzentrisch zur Mittelachse 7 verläuft. Über ein unter einem Winkel zur Mittelachse 7 verlaufendes Überleitungsrohrstück 87 wird das Küht-/Schmiermittel in einen konzentrisch zur Mittelachse 65 des Schneidenkopfs 5 verlaufenden Kühl-/Schmiermittelkartal 89 geleitet. Vorzugsweise ist ein im Kühl-/Schmiermittetkanat 89 liegendes Zufuhrrohr 91 vorgesehen, das mit dem Überleitungsrohrstück 87 dicht verbunden oder einstückig mit diesem ausgebildet ist.

Durch geeignete Dichtungsmaßnahmen ist sichergestellt, dass das Kühl-/Schmiermittel von dem Kühl-/Schmiermittelkanal 85 verlustfrei in den Kühl-/Schmiermittelkanal 89 überführt werden und nicht zur Lagereinrichtung 13 gelangen kann. Insbesondere ist das Rillenkugellager 51 als gedichtetes Lager ausgebildet.

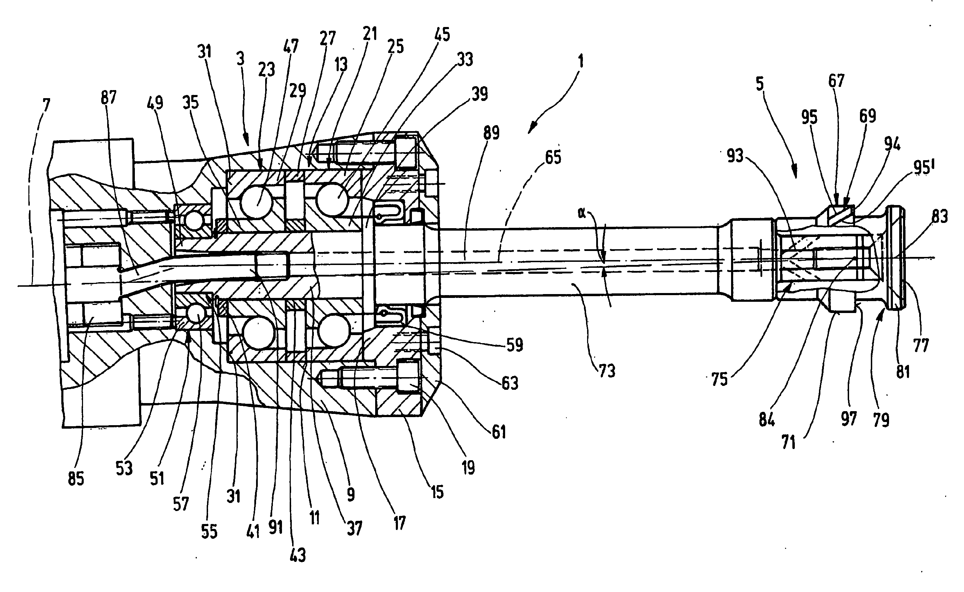

In Figur 1 ist angedeutet, dass sich der Kühl-/Schmiermittelkanal 89 bis in den Befestigungsbereich 75 des Schneidenkopfs 5 beziehungsweise Werkzeugschafts 73 erstreckt und über unter einem Winkel zur Mittelachse 65 des Werkzeugschafts 73 verlaufende Kanäle 93 zum Schneidenkranz 67 fortgesetzt wird. Die Mündung der Kanäle 93 kann -bei der Darstellung gemäß der Figur- rechts vom Schneidenkranz 67 vorgesehen werden, falls eine Bohrungsoberfläche eines Sackloches zu bearbeiten ist. Sie münden links vom Zahnkranz 67, falls eine Bohrungsoberfläche eines Durchgangslochs bearbeitet werden soll.

Durch die Kühl-/Schmiermittelzufuhr ist es möglich, ein Kühl-/Schmiermittel unmittelbar in den Bereich des Schneidenkranzes 67 zuleiten, also in den Bereich, in den mittels der mindestens einen Schneide 69 eine Bohrungsoberfläche in einem Werkstück bearbeitet und mindestens eine Nut eingebracht wird.

Falls mittels des Räumwerkzeugs 1 eine parallel zur Mittelachse der bearbeiteten Bohrungsoberfläche verlaufende Nut hergestellt werden soll, bedarf es nur einer einzigen Schneide 69, deren Schneidkante 94 nach vorne in Vorschubrichtung weist und deren Führungsflächen 95, 95' parallel zur Mittelachse 65 des Schneidenkopfs 5 beziehungsweise des Schneidenkranzes 67 verlaufen. Bei dem hier dargestellten Ausführungsbeispiel sind die Führungsflächen 95, 95' allerdings unter einem Winkel zur Mittelachse 65 angeordnet. Dieser Winkel bestimmt den Drallwinkel der bei der Bearbeitung einer Bohrungsoberfläche entstehenden mindestens einen Nut.

Die Schneidkante 95 ist also im Wesentlichen auf einer gedachten zylindrischen Oberfläche angeordnet, deren Mittelachse mit der Mittelachse 65 des Schneidenkopfs zusammenfällt. Sie kann aber, wie in der Figur dargestellt, auf dieser zylindrischen Oberfläche unter einem Winkel verlaufen, wie dies in der Figur dargestellt ist.

Im Folgenden wird auf die Funktion des Räumwerkzeugs näher eingegangen, damit auch auf das Verfahren zur Bearbeitung einer Bohrungsoberfläche, nämlich zur Herstellung einer Nut mittels einer geometrisch definierten Schneide:

Zunächst wird die Mittelachse 7 des Grundkörpers 3 konzentrisch zur Mittelachse der zu bearbeitenden- Bohrungsoberfläche angeordnet. Der Grundkörper 3 rotiert um seine Mittelachse 7. Damit läuft der Lagerzapfen 37 des Schneidenkopfs 5 auf einer Kegelmantelfläche um, deren Kegelwinkel 2α beträgt.

Die Spitze des gedachten Kegels fällt mit dem Taumelpunkt zusammen, bei dem in der Figur dargestellten Ausführungsbeispiel des Räumwerkzeugs 1, das mit einer Führungseinrichtung -79 versehen ist, mit dem Mittelpunkt 83.

Falls bei dem Räumwerkzeug 1 die Führungseinrichtung 79 weggelassen wird, fällt der Scheitelpunkt des gedachten Kegels mit dem Mittelpunkt 84 des Flugkreises der mindestens einen Schneide 69 zusammen.

Auf der Ebene, in der der Führungsring 81 der Führungseinrichtung 79 liegt, und auf der Ebene, in der die Stirnseite 97 des Schneidenkranzes 67 liegt, steht die Mittelachse 65 des Schneidenkopfs 5 senkrecht. Damit ist die Ebene des Führungsrings 81 beziehungsweise der Stirnseite 97 gegenüber der Mittelachse 7 des Grundkörpers 3 und der Mittelachse der zu bearbeitenden Bohrungsoberfläche um den Winkel α geneigt.

Bei einer Rotation des Grundkörpers 3 führt die Stirnseite 97 des Schneidenkranzes 67 gegenüber der Mittelachse 7 eine Taumelbewegung aus, so dass die Schneidkante 64 der mindestens eine Schneide 69 gegenüber der axialen Relativbewegung zwischen Grundkörper 3 und dem zu bearbeitenden Werkstück eine überlagerte Axialbewegung durchführt und sich stückweise in die Bohrüngsoberfläche hineinarbeitet, um dort eine Nut herzustellen. Die Nut nimmt dann die Führungsflächen 95, 95' auf. Damit sich die Schneide 69 nicht in der entstehenden Nut festfrisst, verlaufen die Führungsflächen 95, 95' vorzugsweise nicht parallel zueinander, vielmehr ist -entgegen der Vorschubbewegung innerhalb der Nuteine Verjüngung vorgesehen.

Wenn, wie in der Figur dargestellt, die Führungsflächen 95, 95' der mindestens einen Schneide 69 unter einem Winkel zur Mittelachse 65 des Schneidenkranzes 67 verlaufen, entsteht mindestens eine auf einer gedachten Schraubenlinie auf der Bohrungsoberfläche verlaufende Nut, in der der Schneidenkranz 67 geführt wird. Der Schneidenkranz 67 wird dabei in der auf der gedachten Schraubenlinie liegenden Nut von den Führungsflächen 95, 95' so geführt, dass er eine Drehbewegung entlang dieser Nut ausführt. Bei einem Drall von 20° dreht sich der Schneidenkranz 67 ebenfalls um 20°.

Bei der Bearbeitung einer Bohrungsoberfläche wird also der Grundkörper 3 in Rotation versetzt, so dass er sich um seine Mittelachse 7 dreht. Dabei wird der exzentrisch in den Grundkörper 3 eingesetzte Schneidenkopf 5 auf einer gedachten Kegelmantelfläche bewegt. Bei einer Vorschubbewegung des Grundkörpers 3 können axiale. Kräfte von dem Grundkörper 3 über die Lagereinrichtung 13 auf den Schneidenkopf 5, damit auf den Schneidenkranz 67 übertragen werden, so dass die Schneidkante 64 der mindestens eine Schneide 69 Material in einem Bereich aus der Bohrungsoberfläche in spanender Bearbeitung abträgt und mindestens eine Nut erzeugt. Die Drehbewegung des Schneidenkranzes 67 erfolgt passiv, das heißt der Schneidenkopf 5 führt lediglich eine Folgebewegung aus. Diese kann geradlinig oder entlang einer Schraubenlinie erfolgen. Ein Drehmoment kann von dem Grundkörper 3 jedenfalls nicht auf den Schneidenkranz 67 übertragen werden. Dieser wird also vielmehr durch die in der in der Bohrungsoberfläche erzeugte Nut geführt und -falls die Führungsflächen 95, 95' der mindestens einen Schneide 69 geneigt sind- entsprechend des Dralls der entstehenden Nut verdreht.

Besonders vorteilhaft ist es, dass der Grundkörper 3 von einer Werkzeugmaschine, wie bei üblichen Werkzeugen in Rotation versetzt Wird und sich um seine Mittelachse 7 dreht Eine Verlagerung des Grundkörpers 3 radial zur Mittelachse 7 ist nicht vorgesehen. Es bedarf daher auch keiner speziellen Programmierung oder Steuerung , um das Werkzeug einsetzen zu können. Im Übrigen zeigt sich, dass das Räumwerkzeug 1 vergleichsweise einfach aufgebaut und damit kostengünstig realisierbar sowie störungsunanfällig ist.

Im Übrigen ist der Schneidenkopf 5 sehr einfach in die zu bearbeitende Bohrung einführbar, weil entweder der Führungsring 81 oder -bei einem Räumwerkzeug ohne Führungseinrichtung 79- die Stirnseite 97 des Schneidenkranzes 67 konzentrisch zur Mittelachse 7 des Grundkörpers 3 liegt. Besonders einfach ist die Bearbeitung einer Bohrungsoberfläche dann, wenn die Führungseinrichtung 79 mit dem Führungsring 81 vorgesehen ist, weil dann das Räumwerkzeug 1 ein Stück in die zu bearbeitende Bohrung eingeführt werden kann, bis die in axialem Abstand in Richtung der Mittelachse 65 gesehen angeordnete mindestens eine Schneide 69 mit der Bohrungsoberfläche in Eingriff tritt.

Vorteilhaft ist es auch, dass trotz der exzentrischen Anbringung des Schneidenkopfs 5 im Grundkörper 3 eine Küht-/Schmiermittelzufuhr gewährleistet werden kann, die im Bereich des Schneidenkranzes 67 mündet und so ausgelegt werden kann, dass sowohl Sackloch- als auch Durchgangsbohrungen zur Erzeugung mindestens einer Nut bearbeitet werden können.

## Patentansprüche

1. Räumwerkzeug zur spanenden Bearbeitung von Bohrungsoberflächen, nämlich zur Einbringung von mindestens einer Nut, mit einem mindestens eine Schneide (69) aufweisenden Schneidenkopf (5) und mit einem den Schneidenkopf (5) tragenden Grundkörper (3), **dadurch gekennzeichnet, dass** der Schneidenkopf (5) drehbeweglich und exzentrisch im Grundkörper (3) gelagert ist, und dass die Mittelachse (65) des Schneidenkopfs (5) mit der Mittelachse (7) des Grundkörpers (3) einen spitzen Winkel α einschließt.

2. Räumwerkzeug nach Anspruch 1, **dadurch gekennzeichnet, dass** der Schneidenkopf (5) einen Werkzeugschaft (73) umfasst, der an seinem einen Ende einen Schneidenkranz (67) aufweist und der mit seinem gegenüberliegenden anderen Ende drehbar im Grundkörper (3) gelagert ist.

3. Räumwerkzeug nach Anspruch 1 -oder 2, **dadurch gekennzeichnet, dass** der Schneidenkopf auswechselbar am Werkzeugschaft (73) anbringbar ist.

4. Räumwerkzeug nach einem der vorhergehenden Anspruche, **dadurch gekennzeichnet, dass** die mindestens eine Schneide (69) auf einem gedachten Flugkreis um die Mittelachse (65) des Schneidenkopfes (5) liegt.

5. Räumwerkzeug nach einem der vorhergehenden Ansprüche, **dadurch gekennzeichnet, dass** mehrere - vorzugsweise in gleichem Abstand zueinander angeordnete - Schneiden (69) vorgesehen sind, die auf einem gedachten Flugkreis um die Mittelachse (65) des Schneidenkopfes (5) liegen.

6. Raumwerkzeug nach einem der vorhergehenden Ansprüche, **dadurch gekennzeichnet, dass** die mindestens eine Schneide (69) eine Führungsfläche (95) aufweist, die unter einem Winkel zur Mittelachse (65) des Schneidenkopfs (5) geneigt ist.

7. Räumwerkzeug nach einem der vorhergehenden Ansprüche, **dadurch gekennzeichnet, dass** der Schneidenkopf (5) eine Führungseinrichtung (79) mit einem Führungsabschnitt aufweist.

8. Räumwerkzeug nach einem der vorhergehenden Ansprüche 4 bis 7, **dadurch gekennzeichnet, dass** der Mittelpunkt (84) des Flugkreises der mindestens einen Schneide (69) oder der Mittelpunkt (83) des Fuhrungsabschnitts auf dem Schnittpunkt der Mittelachse (7) des Grundkörpers (3) mit der Mittelachse (65) des Schneidenkopfs (5) liegt.

9. Räumwerkzeug nach einem der vorhergehenden Ansprüche, **dadurch gekennzeichnet, dass** der Werkzeugschaft (73) im Grundkörper (3) mittels einer Lagereinrichtung (13) gelagert ist; die radiale und axiale Kräfte aufnimmt.

10. Räumwerkzeug nach Anspruch 9, **dadurch gekennzeichnet, dass** die Lagereinrichtung (13) mindestens ein - vorzugsweise zwei - Schrägkugellager (21,23) und ein Rillenkugellager (51) aufweist.

11. Räumwerkzeug nach einem der vorhergehenden Ansprüche, **gekennzeichnet durch** eine Kühl-/Schmiermittelzufuhr, über die ein Kühl-/Schmiei-mittel **durch** den Grundkörper (3) und **durch** den Schneidenkopf (5) zu der mindestens einen Schneide (69) förderbar ist.

12. Verfahren zur spanenden Bearbeitung ,einer Bohrungsoberfläche, nämlich zur Einbringung von mindestens einer Nut, mittels eines einen mit mindestens einer Schneide versehenden Schneidenkopf und einen diesen tragenden Grundkörper auf weisenden Räumwerkzeug, insbesondere mittels eines Räumwerkzeugs nach einem der Ansprüche 1 bis 11, **dadurch gekennzeichnet, dass** der Schneidenkopf in die zu bearbeitende Bohrung in einem Werkstück eingeführt wird und während einer Drehbewegung des Grundkörpers und einer axialen Relativbewegung zwischen Räumwerkzeug und Werkstück eine Taumelbewegung und eine von der in die Bohrungsoberfläche eingebrachten mindestens einen Nut bewirkte Folgebewegung ausführt.

## Claims

1. Broaching tool for machining bore surfaces namely for introducing at least one groove, with a cutter head (5) having at least one cutter (69) and with a body (3) bearing the cutter head (5), **characterized in that** the cutter head (5) can undergo a rotary motion and is disposed eccentrically in the body (3) and that the middle axis (65) of the cutter head (5) forms an acute angle α with the middle axis (7) of the body (3).

2. Broaching tool according to claim 1, **characterized in that** the cutter head (5) comprises a tool shank (73) which at its end is provided with a cutter collar (67) and which with its other, opposite end is rotatably disposed in the body (3).

3. Broaching tool according to claim 1 or 2, **characterized in that** the cutter head (5) is replacably disposed on the tool shank (73).

4. Broaching tool according to one of the preceding claims, **characterized in that** the at least one cutter (69) lies on an imaginary circular path around the middle axis (65) of the cutter head (5).

5. Broaching tool according to one of the preceding claims, **characterized in that** there are provided several cutters (69) - preferably disposed at a distance from one another - that lie on an imaginary circular path around the middle axis (65) of the cutter head (5).

6. Broaching tool according to one of the preceding claims, **characterized in that** the at least one cutter (69) has a guiding surface (95) which is inclined at an angle toward the middle axis (65) of the cutter head (5).

7. Broaching tool according to one of the preceding claims, **characterized in that** the cutter head (5) has a guiding arrangement (79) with a guiding section.

8. Broaching tool according to one of the preceding claims 4 to 7, **characterized in that** the middle point (84) of the circular path of the at least one cutter (69) or the middle point (83) of the guiding section lies on the intersection of the middle axis (7) of the body (3) and the middle axis (65) of the cutter head (5).

9. Broaching tool according to one of the preceding claims, **characterized in that** the tool shank (73) is supported in the body (3) by means of a bearing arrangement (13) that absorbs radial and axial forces.

10. Broaching tool according to claim 9, **characterized in that** the bearing arrangement (13) has at least one - and preferably two - angular ball bearings (21, 23) and a grooved ball bearing (51).

11. Broaching tool according to one of the preceding claims, **characterized by** a coolant/lubricant system whereby a coolant/lubricant can be conducted through the body (3) and through the cutter head (5) to the at least one cutter (69).

12. Method for machining the surface of a bore, namely for introducing at least one groove, by means of a cutter head provided with at least one cutter and by means of a broaching tool with a supporting body, particularly by means of a broaching tool according to one of claims 1 to 11, **characterized in that** the cutter head is introduced into the bore in a work piece that is to be machined, and during the rotary motion of the body and a relative axial movement between the broaching tool and the work piece brings about a tumbling movement and a following movement that is induced by the at least one groove formed in the bore surface.

## Revendications

1. Outil à brocher pour usiner des surfaces de trous par enlèvement de matière, à savoir pour brocher au moins une rainure, comportant une tête porte-lames (5) présentant au moins une lame (69), et un corps de base (3) portant la tête porte-lames (5), **caractérisé en ce que** la tête porte-lames (5) est montée mobile en rotation et de manière excentrique dans le corps de base (3) et **en ce que** l'axe médian (65) de la tête porte-lames (5) renferme, avec l'axe médian (7) du corps de base (3), un angle aigu α.

2. Outil à brocher selon la revendication 1, **caractérisé en ce que** la tête porte-lames (5) comprend une queue d'outil (73) qui présente une couronne de coupe (67) à l'une de ses extrémités et qui, par son autre extrémité opposée, est monté mobile en rotation dans le corps de base (3).

3. Outil à brocher selon la revendication 1 ou 2, **caractérisé en ce que** la tête porte-lames (5) peut être fixée sur la queue d'outil (73) de manière interchangeable.

4. Outil à brocher selon l'une des revendications précédentes, **caractérisé en ce que** la au moins une lame (69) se situe sur un cercle de coupe théorique autour de l'axe médian (65) de la tête porte-lames (5).

5. Outil à brocher selon l'une des revendications précédentes, **caractérisé en ce que** plusieurs lames (69), de préférence disposées à distance égale les unes des autres, sont prévues qui se situent sur un cercle de coupe théorique autour de l'axe médian (65) de la tête porte-lames (5).

6. Outil à brocher selon l'une des revendications précédentes, **caractérisé en ce que** la au moins une lame (69) présente une surface de guidage (95) qui est inclinée sous un angle par rapport à l'axe médian (65) de la tête porte-lames (5).

7. Outil à brocher selon l'une des revendications précédentes, **caractérisé en ce que** la tête porte-lame (5) présente un dispositif de guidage (79) comportant une section de guidage.

8. Outil à brocher selon l'une des revendications précédentes 4 à 7, **caractérisé en ce que** le centre (84) du cercle de coupe de la au moins une lame (69) ou le centre (83) de la section de guidage se situe sur l'intersection de l'axe médian (7) du corps de base (3) et de l'axe médian (65) de la tête porte-lames (5).

9. Outil à brocher selon l'une des revendications précédentes, **caractérisé en ce que** la queue d'outil (73) est monté dans le corps de base (3) au moyen d'un système de palier (13) absorbant des efforts radiaux et axiaux.

10. Outil à brocher selon la revendication 9, **caractérisé en ce que** le système de palier (13) présente au moins un, de préférence deux roulements à billes obliques (21, 23), et un roulement rainuré à billes (51).

11. Outil à brocher selon l'une des revendications précédentes, **caractérisé par** un système d'alimentation en réfrigérant / lubrifiant par l'intermédiaire duquel un réfrigérant / lubrifiant peut être acheminé vers la au moins une lame (69) en passant par le corps de base (3) et la tête porte-lames (5).

12. Procédé pour usiner une surface de trous par enlèvement de matière, à savoir pour brocher au moins une rainure, au moyen d'un outil à brocher présentant une tête porte-lames munie d'au moins une lame et un corps de base portant ladite tête porte-lames, notamment au moyen d'un outil à brocher selon l'une des revendications 1 à 11, **caractérisé en ce qu'**on introduit la tête porte-lames dans le trou à usiner dans une pièce et **en ce qu'**on effectue, pendant un mouvement de rotation du corps de base et un mouvement relatif axial entre l'outil à brocher et la pièce, un mouvement de nutation et un mouvement consécutif engendré par la au moins une rainure réalisée dans la surface de trous.
